# EUROPÄISCHE PATENTSCHRIFT

(11) **EP 1 270 904 B1**
(45) Veröffentlichungstag und Bekanntmachung des Hinweises auf die Patenterteilung: **08.11.2006**
(21) Anmeldenummer: 02013227.0
(22) Anmeldetag: 15.06.2002
(51) Int. Cl.: F02D 9/10

(54) **Verfahren zur Herstellung eines Schaltklappenverbandes**
Method of manufacturing a control valve assembly
Procédé de fabrication d'un ensemble de volets de commande

(30) Priorität: 27.06.2001 DE 10131109
(43) Veröffentlichungstag der Anmeldung: 02.01.2003
(73) Patentinhaber: Mann + Hummel GmbH, 71638 Ludwigsburg (DE)
(72) Erfinder: Neuschwander, Helmut, 71636 Ludwigsburg (DE); Rentschler, Klaus, 71126 G-ufelden (DE); Schraudolf, Joachim, 74078 Heilbronn (DE)
(74) Vertreter: Voth, Gerhard

(56) Entgegenhaltungen:
- WO-A-00/65214
- WO-A-96/31692
- DE-C- 19 717 347
- FR-A- 2 797 931

## Beschreibung

### Stand der Technik

Die Erfindung betrifft ein Verfahren zur Herstellung eines Verbandes von Schaltklappen nach der Gattung des Patentanspruches 1.

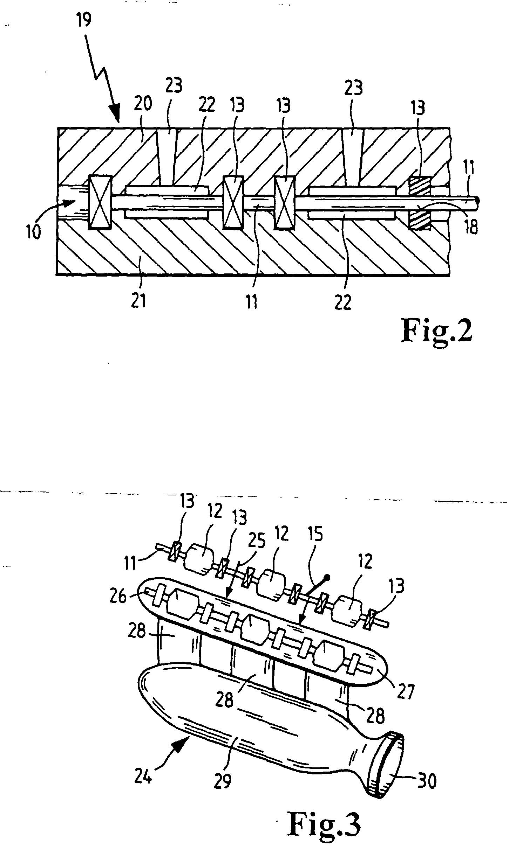

Der herzustellende Schaltklappenverband ist beispielsweise aus der WO 00/65214 bekannt. Es handelt sich hierbei um einen Schaltklappenverband, wie er in das Saugrohr einer Brennkraftmaschine eingebaut werden kann. Dieser besitzt gemäß der Ausführung gemäß der Figuren 3a, 3b eine einteilige Stahlwelle 32, auf die die Schaltklappen 15 montagegespritzt sind. Das Verfahren des Montagespritzens, beinhaltet weiterhin die Herstellung von Klappenrahmen 16 in derselben Spritzgußform, wie für die Schaltklappen 15 verwendet. Dies wird erreicht durch Öffnen einer Kavität mittels Schubkernen, wobei diese Kavität für die Schaltklappen 15 teilweise durch die Klappenrahmen 16 mitgebildet wird.

Der beschriebene Schaltklappenverband läßt sich durch Verwendung des Montagespritzgießverfahrens sehr kostengünstig herstellen. Jedoch ist aufgrund der Anforderungen, dass der Schaltklappenverband nur in einer Form hergestellt werden soll, eine Herstellung geometrisch komplizierter Teile nicht möglich. Daher müssen sowohl die Klappenrahmen 16 als auch die Schaltklappen 15 eine einfache Geometrie aufweisen, wodurch zusätzliche Funktionen des Schaltklappenverbandes geometrisch nicht realisierbar sind.

Aus der DE 197 17 347 ist ein Verfahren zum Herstellen einer Schaltklappe bekannt, wobei eine erste Hülse und eine zweite Hülse in einem vorgegebenen axialem Abstand auf eine Welle aufgebracht und radial verpresst werden. Die Welle wird zwischen der ersten und der zweiten Hülse mit einem thermoplastischen Grundstoff derart umspritzt, dass sich ein Flügelkörper bildet, der mindestens eine Aussparung aufweist.

Es ist ferner aus der WO 96/316 92 ein Ansaugsystem bekannt, bei dem eine Schaltklappe in eine vorhandene Aussparung eingelegt wird und ein Dichtsystem vorgesehen ist, das im Bereich des Schaltklappenverbandes die Abdichtung des gesamten Systems zu einem Zwischenbauteil bewirkt. Der Schaltklappenverband weist relativ einfache Strukturen auf.

Aus der FR 27 97 931 sind Schaltklappen zu entnehmen, die auf einer gemeinsamen Welle befestigt sind und in eine vorgesehene Ventilstruktur eingebaut werden. Auch diese Schaltklappen sind einfach aufgebaut und erfordern keine besonderen Einbaumaßnahmen.

Aufgabe der Erfindung ist es daher, ein Verfahren für die Herstellung eines Schaltklappenverbandes zu schaffen, welches kostengünstig ist und die Realisierung komplizierter geometrischer Strukturen ermöglicht. Diese Aufgabe wird durch die Merkmale des Anspruches 1 gelöst.

### Vorteile der Erfindung

Das erfindungsgemäße Verfahren beinhaltet die Herstellung eines Verbandes von Schaltklappen auf einer gemeinsamen Welle, wobei die Klappen in Urformtechnik angeformt werden. Dies ist insbesondere durch Anspritzen von Kunststoffklappen an die Welle möglich. Jedoch sind auch andere urformtechnische Verfahren denkbar. Zum Beispiel können Metallklappen auf die Welle angegossen werden. Auch sintertechnische Verfahren sind vorstellbar.

Gekennzeichnet ist das Verfahren durch die Anwendung der folgenden Verfahrensschritte.

Es wird mindestens ein vorgefertigtes Funktionsbauteil auf die Welle aufgesteckt. Zu diesem Zweck ist das Funktionsbauteil mit einer Durchführung für die Welle versehen, wodurch ein Aufstecken nur ausgehend von einem der Wellenenden möglich ist, da die Durchführung für sich geschlossen hergestellt ist.

Das Funktionsbauteil kann vorteilhafterweise mit beliebig komplexen Strukturen versehen werden. Beispielsweise lassen sich spritzgegossene Lagerböcke für die Welle auf selbige aufschieben. Diese können beispielsweise mit Entformungsrichtung genau senkrecht zur Entformungsrichtung der angespritzten Schaltklappen gestaltet, was entsprechend dem oben genannten Dokument des Standes der Technik nicht möglich ist. Auch können diese Funktionsbauteile mehrteilig aufgebaut sein um der Komplexität gerecht zu werden.

Anschließend wird die Welle mit dem Funktionsbauteil zusammen in eine Form eingelegt, die die Herstellung der Schaltklappen zum Beispiel mittels Spritzgießen ermöglicht. Damit ist das Funktionsbauteil nach Herstellung der Klappen in den Klappenzwischenräumen auf der Welle gefangen, da aufgrund der Abmessungen der Schaltklappen ein Abziehen des Funktionsbauteils nicht mehr möglich ist. Das Herstellungsverfahren ist also Voraussetzung für die Herstellung eines Schaltklappenverbandes mit komplexer Struktur wobei die komplexen Strukturen durch die Funktionsbauteile gewährleistet werden.

Weiterhin sieht die Erfindung vor, dass das Funktionsbauteil drehsteif auf der Welle arretiert wird. Dies ist für einen Anlenkhebel sinnvoll, der die Betätigungskraft beispielsweise einer Schubstange in ein Drehmoment an der Welle umwandeln soll.

Den besagten Anlenkhebel ist in der Mitte der Welle vorgesehen. Auf diese Weise ist eine ausgewogene Kraftverteilung auf alle Schaltklappen möglich. Außerdem verringern sich auf diese Weise die Toleranzen während des Schaltvorgangs, die aufgrund einer Torsion der Welle zwischen den einzelnen Klappen auftreten können.

Gemäß einer weiteren Ausbildung der Erfindung sind die Funktionsbauteile drehbar auf der Welle gelagert. Dies ist insbesondere dann von Bedeutung, wenn die Funktionsbauteile zur Lagerung der Welle im Einbauort verwendet werden.

Eine weitere Ausgestaltung der Erfindung sieht vor, dass das Funktionsbauteil axial auf der Welle festgelegt wird. Hierbei ergibt sich eine einfachere Möglichkeit die Welle mit den vormontierten Funktionsbauteilen zu handhaben, da diese axial nicht verrutschen können. Hierdurch wird insbesondere das Einlegen der Welle in die Form erleichtert. Außerdem kann eine axiale Festlegung auch aufgrund funktionaler Aspekte erfolgen. Beispielsweise läßt sich auf diese Weise eine axiale Festlegung der Welle am Einbauort erreichen, um ein Scheuern der Schaltklappen in den zugehörigen Kanälen zu verhindern.

Neben den Klappen kann gemäß einer weiteren Ausgestaltung der Erfindung auch eine andere Funktionseinheit an der Welle angeformt sein. Diese wird damit entsprechend den Klappen durch dasselbe oder ein anderes Formwerkzeug direkt an die Welle angespritzt. Hierfür eignet sich insbesondere ein Anlenkhebel, der eine Schaltkraft auf die Welle übertragen soll, wodurch das Schaltmoment für die Drehung der Schaltklappen zustande kommt.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

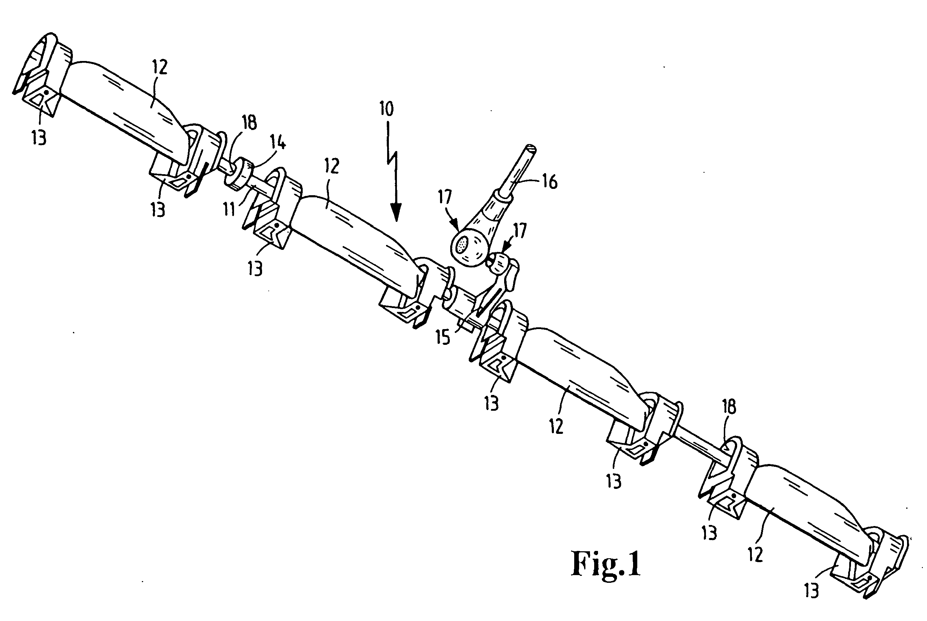

Weitere Einzelheiten der Erfindung werden in der Zeichnung anhand von schematischen Ausführungsbeispielen beschrieben. Hierbei zeigen
- Figur 1: einen gemäß dem erfindungsgemäßen Verfahren hergestellten Schaltverband als perspektivische Ansicht,
- Figur 2: schematisch den Schaltverband in der Form im Schnitt vor dem Einspritzen des Klappenkunststoffes und
- Figur 3: schematisch den Einbau des Schaltverbandes in ein Saugrohr in perspektivischer Ansicht.

### Beschreibung der Ausführungsbeispiele

Ein Schaltklappenverband 10 besteht aus einer Welle 11, die beispielsweise aus Stahl gefertigt ist und auf der Schaltklappen 12 beispielsweise aus Kunststoff aufgespritzt sind. Diese Schaltklappen sind voneinander beabstandet, wobei zwischen den Schaltklappen Lagerböcke 13 aus Kunststoff angeordnet sind. Weiterhin ist ein Axialanschlag 14 vorgesehen, mit dessen Hilfe die Welle axial am Einbauort festgelegt werden kann.

Ebenfalls angespritzt ist eine weitere Funktionseinheit 15 in Form eines Anlenkhebels, der mit einer teilweise dargestellten Schubstange 16 über ein Kugelgelenk 17 verbunden werden kann. Auf diese Weise wird die Steuerung des Schaltverbandes beispielsweise durch eine nicht dargestellte Unterdruckdose möglich.

Axialanschlag 14 sowie Lagerböcke 13 sind Funktionsbauteile im Sinne der Erfindung. Diese weisen Durchführungen 18 auf durch welche die Welle 11 geschoben werden kann. Da die Durchführungen geschlossen sind, können die Funktionsbauteile lediglich durch Aufschieben auf die Welle vom Ende her montiert werden. Daher verhindern die aufgespritzten Schaltklappen 12 eine nachträgliche Demontage der Funktionsbauteile.

In Figur 2 ist eine Form 19, bestehend aus einer oberen Formhälfte 20 und einer unteren Formhälfte 21 dargestellt. Zwischen die beiden Formhälften ist ein Rohling für einen Schaltverband, bestehend aus der Welle 11 und den Lagerböcken 13 (vereinfacht dargestellt) eingelegt. Weiterhin sind Kavitäten 22 in der Form zu erkennen, welche über Speiser 23 in der oberen Formhälfte 20 mit Kunststoff gefüllt werden können. Dadurch wird die Welle 11 durch die so entstehende Schaltklappe umspritzt, wodurch der Schaltklappenverband gebildet wird.

Der Einbau eines Schaltklappenverbandes entsprechend dem Schaltklappenverband 10 (hier nur mit 3 Schaltklappen 12) in ein Saugrohr 24 ist schematisch perspektivisch in Figur 3 dargestellt. Die Fügerichtung ist durch Pfeile 25 angedeutet. Der Schaltklappenverband weist wie beschrieben Lagerböcke 13 und eine Funktionseinheit 15 in Form der Anlenkkurbel auf. Der gesamte Schaltverband wird in eine Aufnahme 26 im Zylinderkopfflansch 27 eingebaut. Die Schaltklappen 12 kommunizieren dabei mit Saugkanälen 28 des Saugrohres 24, welche gemeinsam von einem Sammelraum 29 abgehen. Der Sammelraum besitzt einen Flansch 30 für eine nicht dargestellte Drosselklappe des Ansaugtraktes für die Brennkraftmaschine.

## Patentansprüche

1. Verfahren zur Herstellung eines Verbandes von Schaltklappen (12) auf einer gemeinsamen Welle (11), indem die Schaltklappen an die Welle in Urformtechnik angeformt werden, **gekennzeichnet durch** die Verfahrensschritte in der angegebenen Reihenfolge, dass
- mindestens ein vorgefertigtes Funktionsbauteil (13, 14) auf die Welle aufgesteckt wird, welches zu diesem Zweck mit einer geschlossenen Durchführung (18) für die Welle versehen ist,
- die Welle (11) mit dem Funktionsbauteil (13, 14) in eine Form (19) eingelegt wird,
- die Schaltklappen (12) mittels der Form (19) hergestellt werden, derart, dass das mindestens eine Funktionsbauteil (13, 14) sich zwischen zwei Schaltklappen (12) befindet, wobei diese eine Demontage des Funktionsbauteils verhindern dass eine weitere Funktionseinheit (15) in Form eines Anlenkhebels an die Welle (11) angeformt wird, wobei der Anlenkhebel in der Mitte der Welle (11) zwischen zwei Schaltklappen (12) angeordnet ist.

2. Verfahren nach Anspruch 1, **dadurch gekennzeichnet, dass** das mindestens eine Funktionsbauteil (13, 14) drehbar auf der Welle gelagert ist und insbesondere als Lagerbock ausgeführt ist.

3. Verfahren nach Anspruch 1, **dadurch gekennzeichnet, dass** das Funktionsbauteil (13, 14) auf der Welle drehsteif arretiert wird.

4. Verfahren nach einem der vorherigen Ansprüche, **dadurch gekennzeichnet, dass** das Funktionsbauteil (13, 14) axial auf der Welle festgelegt wird.

5. Verfahren nach einem der vorherigen Ansprüche, **dadurch gekennzeichnet, dass** außer den Klappen auch eine andere Funktionseinheit (15) an die Welle angeformt wird.

## Revendications

1. Procédé de fabrication d'un ensemble de clapets de commutation (12) sur un arbre (11) commun, les clapets de commutation étant rapportés sur l'arbre par moulage primaire,
**caractérisé par**
les étapes de procédé dans l'ordre indiqué :
- on fait glisser sur l'arbre au moins un composant fonctionnel (13, 14) préfabriqué qui à cet effet est muni d'un passage (18) fermé pour l'arbre,
- on insère l'arbre (11) avec le composant fonctionnel (13, 14) dans un moule (19),
- on réalise les clapets de commutation (12) au moyen du moule (19) de sorte qu'au moins un composant fonctionnel (13, 14) se trouve entre deux clapets de commutation (12), ceux-ci empêchant un démontage de l'élément fonctionnel,
- une autre unité fonctionnel (15) en forme de levier articulé est rapportée par moulage sur l'arbre (11), le levier articulé étant disposé au centre de l'arbre (11) entre deux clapets de commutation (12).

2. Procédé selon la revendication 1,
**caractérisé en ce qu'**
au moins un composant fonctionnel (13, 14) est logé en rotation sur l'arbre et présente en particulier la forme d'un support de palier.

3. Procédé selon la revendication 1,
**caractérisé en ce que**
le composant fonctionnel (13, 14) est bloqué en rotation sur l'arbre.

4. Procédé selon l'une quelconque des revendications précédentes,
**caractérisé en ce que**
le composant fonctionnel (13, 14) est fixé axialement sur l'arbre.

5. Procédé selon l'une quelconque des revendications précédentes,
**caractérisé en ce qu'**
outre les clapets une autre unité fonctionnelle (15) est rapportée par moulage sur l'arbre.

## Claims

1. Method of producing an assembly of control valves (12) on a common shaft (11) by the control valves being integrally moulded onto the shaft using primary forming techniques, **characterised by** the method steps in the sequence specified -
- at least one pre-fabricated functional component (13, 14) is placed onto the shaft, the said component being provided for this purpose with a closed passage (18) for the shaft,
- the shaft (11), with the functional component (13, 14), is inserted into a mould (19),
- the control valves (12) are produced through the intermediary of the mould (19) in such a manner that the at least one functional component (13, 14) is situated between two control valves (12), wherein the said control valves prevent a disassembly of the functional component, and that an additional functional unit (15) in the form of an actuating lever is integrally moulded onto the shaft (11), wherein the actuating lever is disposed in the centre of the shaft (11) between two control valves (12).

2. Method according to claim 1, **characterised in that** the at least one functional component (13, 14) is configured so as to be rotatable on the shaft and is more especially in the form of a bearing block.

3. Method according to claim 1, **characterised in that** the functional component (13, 14) is locked on the shaft so as to be non-rotatable.

4. Method according to one of the preceding claims, **characterised in that** the functional component (13, 14) is secured to the shaft in an axial manner.

5. Method according to one of the preceding claims, **characterised in that** another functional component (15) is also integrally moulded onto the shaft in addition to the valves.
